(19) Europäisches Patentamt
European Patent Office
Office européen des brevets

(11) EP 3 184 584 A1

(12) **EUROPEAN PATENT APPLICATION**

(43) Date of publication:
**28.06.2017 Bulletin 2017/26**

(21) Application number: **15201586.3**

(22) Date of filing: **21.12.2015**

(51) Int Cl.:
***C08K 5/00*** (2006.01)
***C08K 5/098*** (2006.01)
***C08K 5/1575*** (2006.01)
***C08K 5/353*** (2006.01)
***C08K 5/45*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
- **Abu Dhabi Polymers Co. Ltd (Borouge) LLC.
Abu Dhabi (AE)**
- **Borealis AG
1220 Vienna (AT)**

(72) Inventors:
- **LAMPELA, Janne
Abu Dhabi (AE)**
- **JUDEH, Yosef
Abu Dhabi (AE)**
- **JOHNSEN, Geir
Abu Dhabi (AE)**
- **ONG, James
Abu Dhabi (AE)**

(74) Representative: **Maiwald Patentanwalts GmbH
Elisenhof
Elisenstrasse 3
80335 München (DE)**

(54) **PREPARATION PROCESS FOR POLYPROPYLENE WITH ENHANCED VISUAL APPEARANCE**

(57) Process for preparing an article by using a polymer composition comprising a polypropylene, a nucleating agent being a sorbitol derivative and a zinc fatty acid salt.

EP 3 184 584 A1

## Description

The present invention is directed to a process for preparing an article with enhanced visual appearance from a polymer composition and to an article obtained by said process. Furthermore, the present invention is directed to the use of an earth alkali fatty acid salt in a process for processing a polymer composition to form said article with enhanced visual appearance.

### Background of the invention

Polymers such as polypropylene are vastly applied in end-use products, including automotive applications, packaging applications, house ware applications, storage applications, and the like. There is a general need for preparation processes for articles with improved visual appearance formed from clarified polymers with low yellowness.

The use of nucleating agents to reduce the haze in articles prepared from polypropylene compositions is known in the art. Nucleating agents provide nucleation sites for polymer crystal growth during molding or fabrication processes. Compositions comprising nucleating agents typically crystallize at higher crystallization temperatures and at faster rates compared to compositions without nucleating agents.

The efficiency of a nucleating agent is typically measured by the peak crystallization temperature of the polymer compositions. A high polymer peak crystallization temperature is indicative of high nucleation efficacy, which usually translates into faster nucleation rates and thus shorter processing cycle times.

Generally, the presence of many nucleation sites associated with adding a nucleating agent results in a larger number of smaller crystals. As a result of the smaller crystals formed therein, clarification of articles prepared from the polymer may also be achieved, although excellent clarity is not always a result. For applications that require excellent clarity of the polymer article, an additive that induces low haze within the final product is added to the polymer composition. Such compounds are generally called clarifying agents or clarifiers.

A combination of high nucleation efficacy and high article clarity is desirable. An effective clarifying agent known in the state of the art are acetals of sorbitols, such as dibenzylidene sorbitol acetal derivatives. However, acetals of sorbitols exhibit a poor solubility in polypropylene compositions and relatively high process temperatures of more than 220 °C are required to dissolve sufficient amounts. Furthermore, the presence of other additives required to adjust the properties of the polypropylene composition according to need influence the efficiency of the clarifying agent and the performance of the other additives.

It is an object of the present invention to provide an improved and more efficient process for the preparation of articles from polypropylene compositions having excellent visual appearance.

It has been surprisingly found that the use of specific additives in specific amounts allow to prepare articles from polymer compositions by a more efficient process resulting in articles with excellent visual appearance.

### Brief description of the invention

The invention is directed to a process for preparing an article comprising the steps of providing a polymer composition, comprising

(i) polypropylene (PP),
(ii) first nucleating agent (NU1) having the structure,

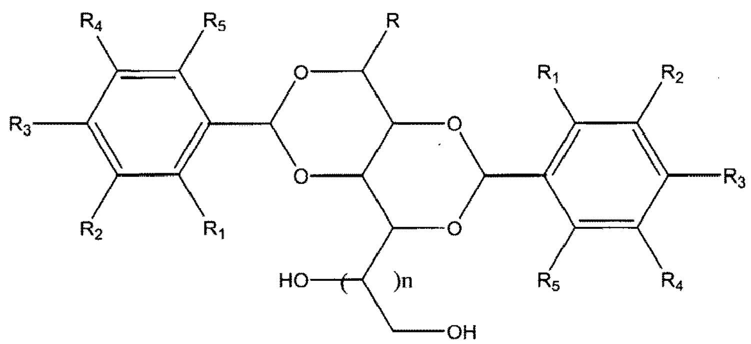

wherein R is independently selected from the group consisting of hydrogen, alkyl, alkenyl, alkynyl, alkoxy, aryloxy, hydroxyalkyl, alkyl halide cycloalkyl, cycloalkenyl, aryl, substituted aryl, and combinations thereof, wherein $R_1$ to $R_5$ are independently selected from the group consisting of hydrogen, alkyl, alkenyl, alkynyl,

alkoxy, aryloxy, hydroxyalkyl, cycloalkyl, cycloalkenyl, aryl, substituted aryl, halide, amino and thioether and combinations thereof, and optionally any adjacent $R_1$ to $R_5$ are linked together to form a 5-membered or 6-membered ring,
and wherein n is an integer from 0 to 2, preferably an integer from 1 to 2, more preferably n is 1.

(iii) a zinc fatty acid salt,

- processing said polymer composition to form the article,

wherein the processing temperature is not higher than 250°C, preferably not higher than 230°C , more preferably not higher than 220°C, still more preferably not higher than 210°C, yet more preferably not higher than 200°C, still yet more preferably not higher than 195 °C, like not higher than 190°C.

Preferably the zinc fatty acid salt is zinc stearate.

In a preferred embodiment the polymer composition does not contain calcium stearate, more preferably does not contain calcium fatty acid salts, still more does not contain earth alkali fatty acid salts. In a still more preferred embodiment the zinc fatty acid salt, like the zinc stearte, is the only fatty acid salt within the polymer composition.

The polymer composition may comprise in addition a second nucleating agent (NU2) and/or an optical brightener (OB).

According to a preferred embodiment of the process of the present invention, the polymer composition comprises

(i) the polypropylene (PP) in an amount of more than 95.0 wt.-%, based on the weight of the polymer composition,
(ii) the first nucleating agent (NU1) in an amount of equal or below 0.5 wt.-%, based on the weight of the polymer composition,
(iii) the zinc fatty acid salt, like the zinc stearate, optionally together with earth alkali fatty acid salts in an amount below 0.5 wt.-%, based on the weight of the polymer composition,
(iv) optionally the second nucleating agent (NU2) in an amount of equal or below 1.0 wt.-%, based on the weight of the polymer composition, and
(v) optionally the optical brightener (OB) in an amount of equal or below 0.100 wt.-%, based on the weight of the polymer composition.

According to another preferred embodiment of the process according to the present invention, the polypropylene (PP is a propylene copolymer preferably comprising equal or below 5 wt.-% comonomer, wherein preferably the comonomer is selected from ethylene and/or one or more $C_4$-$C_8$ $\alpha$-olefins, more preferably selected from ethylene and/or 1-butene, yet more preferably is ethylene.

According to another preferred embodiment of the process according to the present invention, the polypropylene (PP), like the propylene copolymer, is monophasic. Thus it is especially preferred that the polypropylene (PP) is a random propylene copolymer.

According to another preferred embodiment of the process according to the present invention, the nucleating agent (NU) has the structure,

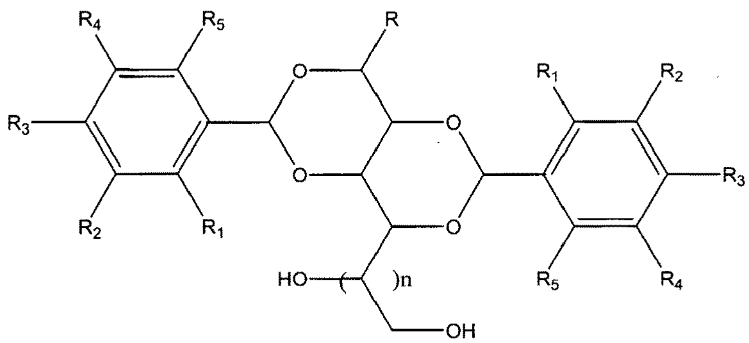

wherein R is independently selected from the group consisting of hydrogen, methyl, ethyl, iso-propyl, n-butyl, sec-butyl, iso-butyl and tert-butyl
wherein $R_1$ to $R_5$ are independently selected from the group consisting of hydrogen, chlorine, methyl, ethyl, n-propyl, iso-propyl, n-butyl, sec-butyl, iso-butyl and tert-butyl,
and wherein n is 1.

According to another preferred embodiment of the process according to the present invention, the nucleating agent (NU) is selected from the group consisting of 1,3:2,4 bis(dibenzylidene)sorbitol, 1,3 : 2,4 bis(4-methylbenzylidene)sorbitol, 1,3 : 2,4 bis(4-ethylbenzylidene)sorbitol, 1,3 : 2,4 bis(3,4-dimethylbenzylidene)sorbitol, and 1,3 : 2,4 bis(3-chloro-benzylidene) sorbitol.

According to another preferred embodiment of the process according to the present invention, the zinc fatty acid salt, like zinc stearate, is present in amount of from 0.008 to 0.150 wt.-%, preferably from 0.010 to 0.100 wt.-%, more preferably from 0.03 to 0.07 wt.-%, and even more preferably from 0.040 to 0.060 wt.%, based on the weight of the polymer composition.

According to another preferred embodiment of the process according to the present invention, the optical brightener (OB) is selected from the group consisting of 5-methyl-2,2'-(vinylenedi-p-phenylene)bisbenzoxazole, 2,2'-(4,4'-diphenol vinyl)dibenzoxazole, 2,5-bis(5-tert-butylbenzooxazol-2-yl)thiophene, 1,4-bis(2-benzoxazolyl)napthalene, 2-(5-chlorobenzo[d]oxazol-2-yl)acetonitrile.

According to another preferred embodiment of the process according to the present invention, the polymer composition is provided by blending, preferably melt blending the polypropylene (PP) with the first nucleating agent (NU1), the zinc fatty acid salt, like zinc stearate, optionally the earth alkali fatty acid salts, optionally the second nucleating agent (NU2) and optionally optical brightener (OB).

Furthermore, the present invention is directed to an article having

(a) a haze in the range from 20 to 40 %, preferably 25 to 35 %, wherein the haze is measured according to ASTM D 1003-07 on 60 x 60 $mm^2$ plaques thickness of 2 mm prepared according to EN ISO 1873-2 at a processing temperature of the plaques of 190°C,
and/or
(b) yellowness index in the range of -20 to 15, preferably from -15 to 5 as determined according to ASTM E313.
and/or
(c) thickness from 0.3 mm to 5.0 mm, preferably from 0.4 to 3.5 mm, more preferably from 0.5 to 2.0 mm.

Furthermore, the present invention is directed to an article which is obtained by the process according to the present invention.

Furthermore, the present invention is directed to the use of a zinc fatty acid salt, preferably zinc stearate, in a process for processing the polymer composition according to claims 1 to 13 at a temperature of not higher than 250°C, preferably not higher than 230°C, more preferably not higher than 220°C, still more preferably not higher than 210°C, yet more preferably not higher than 200°C, still yet more preferably not higher than 195 °C, like not higher than 190°C to form an article, preferably a molded article from said polymer composition, said article having reduced haze relative to the same article formed in the absence of said a zinc fatty acid salt, wherein haze is measured according to ASTM D 1003-07 on 60 x 60 $mm^2$ plaques having thickness of 2 mm prepared according to EN ISO 1873-2 at a processing temperature of the plaques of 190°C., wherein the reduction of haze preferably is at least 5%, preferably by at least 10%, more preferably by at least 15 %, even more preferably by at least 25 %, and most preferably by at least 35%.

## Detailed description of the invention

A suitable process for the preparation of the present articles must allow achieving these products with excellent visual appearance particularly with low haze and optionally with low yellowness. Otherwise, customer acceptance with respect to the resulting products will be only limited. The present inventors have now established a modified process for preparing articles with such excellent optical properties from polypropylene compositions comprising selected nucleating agents and optical brighteners.

Most importantly, this procedure involves the additional use of a zinc fatty acid salt in combination with selected nucleating agents and optical brighteners at modified process conditions. This modified process conditions make the resulting process simpler and more efficient.

Accordingly, the present invention is directed to a process for preparing an article comprising the steps of

- providing a polymer composition including the following components,

  (i) polypropylene (PP),
  (ii) first nucleating agent (NU1) having the structure,

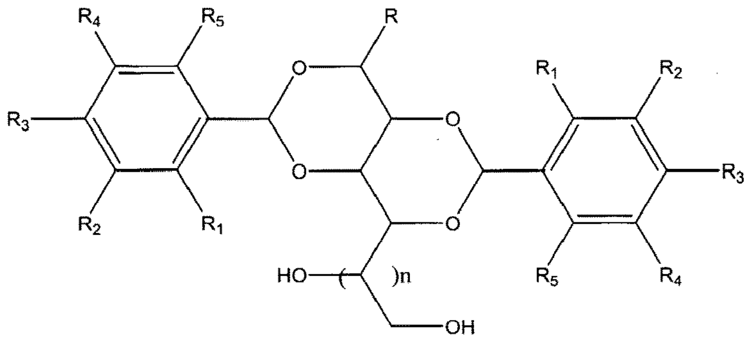

wherein R is independently selected from the group consisting of hydrogen, alkyl, alkenyl, alkynyl, alkoxy, aryloxy, hydroxyalkyl, alkyl halide cycloalkyl, cycloalkenyl, aryl, substituted aryl, and combinations thereof, wherein $R_1$ to $R_5$ are independently selected from the group consisting of hydrogen, alkyl, alkenyl, alkynyl, alkoxy, aryloxy, hydroxyalkyl, cycloalkyl, cycloalkenyl, aryl, substituted aryl, halide, amino and thioether and combinations thereof, and optionally any adjacent $R_1$ to $R_5$ are linked together to form a 5-membered or 6-membered ring, and wherein n is an integer from 0 to 2, preferably an integer from 1 to 2, more preferably n is 1.

(iii) earth alkali fatty acid salt (EAF),
(iv) optionally a second nucleating agent (NU2) and
(v) optionally optical brightener (OB), and

- processing said polymer composition to form the article,

wherein the processing temperature is not higher than 250°C, preferably not higher than 230°C, more preferably not higher than 220°C, still more preferably not higher than 210°C, yet more preferably not higher than 200°C, still yet more preferably not higher than 195 °C, like not higher than 190°C.

The process according to the present invention requires the special combination of high nucleation efficacy and high article clarity. Suitable clarifying agents well-known in the state of the art are for instance acetals of sorbitols, such as dibenzylidene sorbitol acetal derivatives. However, acetals of sorbitols exhibit a poor solubility in polypropylene compositions. Consequently, relatively high processing temperatures of more than 220 °C were believed to be necessary in the prior art to dissolve sufficient amounts of this type of nucleating agents allowing to achieve the desired high level of optical properties. Furthermore, the presence of other additives required to adjust the properties of the polypropylene composition are also believed to influence the efficiency of the clarifying agent and the performance of the other additives typically included in the polypropylene compositions.

The present inventors have now surprisingly demonstrated that the additional use of zinc fatty acid salt, like zinc stearate in the process according to the present invention helps to better dissolve acetals of sorbitol-type nucleating agents in the polymer composition thereby allowing to substantially reducing the processing temperature of the polymer composition when forming the article with the desired optical properties.

Evidently, performing the processing of the polymer compositions at reduced temperatures to form the articles with the desired high level of optical properties renders the overall preparation process much more economic, particularly in terms of energy savings, process economy and reduced wear of reactors and process equipment.

In one embodiment of the process according to the present invention, the present article is produced at processing temperatures below 250 °C, preferably below 230 °C, more preferably below 220 °C, even more preferably below 210°C, or more preferably below 200°C, and most preferred below 195°C. In this respect the invention is also directed to a process for producing the inventive article, wherein the article is produced at processing temperatures below 250 °C, preferably below 230 °C, more preferably below 220 °C, even more preferably below 210°C, or even more preferably below 200°C and most preferred below 195°C. The processing temperature applied in the process according to the present invention can generally be in the range of from 160°C to 230°C, preferably from 170°C to 225°C, more preferably from 180°C to 215°C, still more preferably from 185°C to 205°C, like in the range of 185 to 200 °C or in the range of 185 to 195 °C. The most preferred temperature range is from 180°C to 192°C.

The articles comprising polymer composition according to the invention may be produced by any common conversion process suitable for thermoplastic polymers. In another embodiment of the present invention, the process for producing the inventive article comprises a molding step, in particular an injection molding step or a blow molding step, such as a thin walled injection molding step, a sequential injection molding step, a co-injection-gas assisted molding step, a structural foam molding step, an extrusion blow molding step, an injection blow molding step or an injection

stretch molding step. The injection molding step is especially preferred. Preferably, the article is produced in this molding step at processing temperatures as already indicated above, which is below 250 °C, preferably below 230 °C, more preferably below 220 °C, even more preferably below 210°C, or even more preferably below 200°C, and most preferred below 195°C. Accordingly, the molding step is also carried out at processing temperatures below 250 °C, preferably below 230 °C, more preferably below 220 °C, even more preferably below 210°C, or even more preferably below 200°C, and most preferred below 195°C. The processing temperature applied in the molding process according to the present invention can therefore be in the range of from 160°C to 230°C, preferably from 170°C to 225°C, more preferably from 180°C to 215°C, still more preferably from 185°C to 205°C, like in the range of 185 to 200 °C or in the range of 185 to 195 °C. The most preferred temperature range is from 180°C to 192°C.

In another embodiment of the present invention, the claimed process is directed to a process for the manufacture of a polymer composition as defined above and below, wherein the polypropylene (PP) is blended, preferably melt blended, with the first nucleating agent (NU1), the zinc fatty acid salt as defined above, like the zinc stearate, optionally the earth alkali fatty acid salts, like the calcium fatty acid salt, e.g. the calcium stearate, optionally the second nucleating agent (NU2), optionally the optical brightener (OB) and optionally further additives, all as defined above and below. The zinc fatty acid salt, like the zinc stearate, optionally the earth alkali fatty acid salts, like the calcium stearate, optionally the second nucleating agent (NU2), optionally the optical brightener (OB) and optionally further additives, may be pre-blend before adding to the polypropylene (PP).

It is appreciated that the first nucleating agent (NU1) and the zinc fatty acid salt, like the zinc stearate, in the pre-blend fulfill together the inequation (IIa), preferably inequation (IIb),

$$\frac{\mathrm{W\ (NU1)}}{\mathrm{W\ (EAF)}} \leq 500 \qquad \text{(IIa)}$$

$$500 \geq \frac{\mathrm{W\ (NU1)}}{\mathrm{W\ (EAF)}} \geq 0.0001 \qquad \text{(IIb)}$$

wherein "W (NU1)" is the weight [wt.-%] of the first nucleating agent (NU1), based on the total weight of the first nucleating agent (NU1), the zinc fatty acid salt as defined above, like the zinc stearate, and the optional earth alkali fatty acid salts, like the calcium fatty acid salt, e.g. the calcium stearate, and "W (EAF)" is the weight [wt.-%] of the zinc fatty acid salt as defined above, like the zinc stearate, together with the optional earth alkali fatty acid salts, like the calcium fatty acid salt, e.g. the calcium stearate, based on the total weight of the first nucleating agent (NU1), the zinc fatty acid salt as defined above, like the zinc stearate, and the optional earth alkali fatty acid salts, like the calcium fatty acid salt, e.g. the calcium stearate.

The process for the manufacture of a polymer composition, wherein the polypropylene (PP) is blended, with a pre-blend is advantageous as the dispersion of the compounds is substantially increased, thereby further improving the transparency and the processability at low process temperatures. In other words, as already explained above, the processing of the polymer composition to the article with high level of optical properties can be carried out at lower temperatures.

The polymer composition which is processed in the process according to the present invention and the components thereof to form the article are defined as follows:

**The polypropylene (PP)**

The polymer composition comprises a polypropylene (PP) as an essential component.

The type of polypropylene is not restricted to a specific one and can be prepared by means within the skill in the art, for example, using single site catalysts or Ziegler-Natta catalysts. The propylene and optionally ethylene and/or $\alpha$-olefins are polymerized under conditions within the skill in the art, for instance as disclosed by Galli, et al., Angew. Macromol. Chem., Vol. 120, 73 (1984), or by Nello Pasquini (Ed.), et al. in Polypropylene Handbook, Carl Hanser Verlag, Munich, 2005, particularly pages 359 to 380, the disclosures of which are incorporated herein by reference.

The polypropylene (PP) can be a heterophasic polypropylene or a monophasic polypropylene. The term "heterophasic polypropylene" denotes a polypropylene with a multiphase structure comprising a crystalline matrix phase in which an elastomeric phase is dispersed, i.e. polypropylene with at least two glass transition temperatures, and the term "monophasic polypropylene" denotes a polypropylene with no multiphase structure, i.e. a polypropylene with just one glass transition temperature. Furthermore, it is appreciated that the polypropylene (PP) can be a propylene homopolymer or a propylene copolymer. The term "propylene homopolymer" denotes a polymer consisting essentially of propylene monomer units. However, due to the requirements of large-scale polymerization it may be possible that the propylene

homopolymer includes minor amounts of comonomer units, which usually are below 0.1 wt.-%, preferably below 0.05 wt.-%, most preferably below 0.01 wt.-% of the polypropylene. In a specific embodiment no comonomers are detectable in a propylene homopolymer.

The polypropylene (PP) has a melt flow rate $MFR_2$ (230°C, 2,16 kg) measured according to ISO 1133 of less than 100 g/10 min, preferably less than 50 g/10 min, more preferably less than 40 g/10 min, even more preferably less than 35 g/10 min, like in the range of 1 to 200 g/10 min, preferably in the range of 10 to 100 g/10 min, more preferably in the range of 15 to 45 g/10 min, even more preferably in the range of 20 to 40 g/10 min, and most preferred in the range of 25 to 35 g/10 min.

The polypropylene (PP) can be a propylene copolymer, in particular a propylene copolymer with a comonomer content equal or below 5.0 wt.-%, preferably equal or below 4.0 wt.-%, more preferably equal or below 3.5 wt.-%, such as in the range of 1.0 to 5.0 wt.-%, preferably in the range of 2.0 to 4.0 wt.-%, more preferably in the range of 3.0 to 4.0 wt.-%, even more preferably in the range of 3.0 to 3.5, based on the weight of the polypropylene (PP).

The propylene copolymer typically comprises one comonomer only, but the use of two or more comonomers is also envisaged. The comonomer is preferably selected from ethylene and/or one or more $C_4$-$C_8$ $\alpha$-olefins, more preferably from ethylene and/or 1-butene, even more preferably the comonomer is ethylene.

The propylene copolymer (PP) can be a random propylene copolymer (R-PP). The term "random propylene copolymer" denotes a copolymer of propylene monomer units and comonomer units, in which the comonomer units are randomly distributed in the polymeric chain. Thus, a random copolymer is different from a heterophasic copolymer comprising a matrix phase and an elastomeric phase dispersed therein, as described above. Accordingly, the random propylene copolymer (R-PP) does not contain an elastomeric polymer phase dispersed therein, i.e. has just one glass transition temperature. However, the random propylene copolymer (R-PP) can be the matrix phase of a heterophasic propylene copolymer.

The random propylene copolymer (R-PP) has a melt flow rate $MFR_2$ (230°C, 2,16 kg) measured according to ISO 1133 of less than 100 g/10 min, preferably less than 50 g/10 min, more preferably less than 40 g/10 min, even more preferably less than 35 g/10 min, like in the range of 1 to 200 g/10 min, preferably in the range of 10 to 100 g/10 min, more preferably in the range of 15 to 50 g/10 min, even more preferably in the range of 20 to 40 g/10 min, and most preferred in the range of 25 to 35 g/10 min.

The random propylene copolymer (R-PP) has a comonomer content, preferably an ethylene content, equal or below 5.0 wt.-%, preferably equal or below 4.0 wt.-%, more preferably equal or below 3.5 wt.-%, such as in the range of 1.0 to 5.0 wt.-%, preferably in the range of 2.0 to 4.0 wt.-%, more preferably in the range of 3.0 to 4.0 wt.-%, yet even more preferably in the range of 3.0 to 3.5, based on the weight of the random propylene copolymer (R-PP).

The random propylene copolymer (R-PP) has a comonomer selected from ethylene and/or one or more $C_4$-$C_8$ $\alpha$-olefins, more preferably selected from ethylene and/or 1-butene. According to a preferred embodiment the polypropylene (PP) is a random propylene ethylene copolymer (R-PP) with ethylene as the only comonomer.

The polypropylene (PP) to be used in the process of the present invention may be prepared by polymerizing, in a slurry reactor, for example a loop reactor, propylene monomers, optionally together with one or more comonomers, in the presence of a polymerization catalyst to produce the polypropylene (PP) or part of it. In the latter case this part is then transferred to a subsequent gas phase reactor, wherein in the gas phase reactor propylene monomers are reacted, optionally in the presence of suitably selected comonomers in order to produce a further part of the polypropylene (PP) in the presence of the reaction product of the first step. This reaction sequence provides a reactor blend of parts (i) and (ii) constituting the polypropylene (PP). It is of course possible that the first reaction is carried out in a gas phase reactor while the second polymerization reaction is carried out in a slurry reactor, for example a loop reactor. The polymerization steps may be adjusted, for example by appropriately selecting monomer feed, comonomer feed, hydrogen feed, temperature and pressure in order to suitably adjust the properties of the polymerization products obtained. Such a process can be carried out using any suitable catalyst for the preparation of propylene monomers, including single site catalysts or Ziegler-Natta catalysts.

Preferably, the process is carried out using a Ziegler-Natta catalyst, in particular a high yield Ziegler-Natta catalyst (so-called fourth and fifth generation type to differentiate from low yield, so called second generation Ziegler-Natta catalysts). A suitable Ziegler-Natta catalyst comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658, WO 99/33843 and WO 2004/029112A1, incorporated herein by reference. Preferred external donors are the known silane-based donors, such as dicyclopentyl dimethoxy silane or cyclohexyl methyldimethoxy silane.

One embodiment of a process as discussed above is a loop-gas phase process, such as developed by Borealis, known as Borstar technology, described for example in EP 0887379 A1 and WO 92/12182 , incorporated herein by reference.

With respect to the above-mentioned preferred slurry-gas phase process, the following general information can

be provided with respect to the process conditions.

Temperature of from 40 °C to 110 °C, preferably between 60 °C and 100 °C, in particular between 80 ° C and 90 ° C, with a pressure in the range of from 20 to 80 bar, preferably 30 to 60 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50 °C to 130 °C, more preferably 80 ° C to 100 °C, at a pressure in the range of from 5 to 50 bar, preferably 15 to 35 bar, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 1 to 8 hours.

In a preferred embodiment, the polymer composition does not comprise (a) further polymer(s) besides the polypropylene (PP) and optionally the second nucleating agent (NU2), in an amount exceeding in total 10 wt.-%, preferably exceeding in total 5 wt.-%, based on the total weight of the polymer composition. Typically if an additional polymer is present, such a polymer is a carrier polymer for additives and thus does not contribute to the improved properties of the polymer composition.

Accordingly in one specific embodiment the polymer composition consists of polypropylene (PP), first nucleating agent (NU1), the zinc fatty acid salt, like the zinc stearate, optionally earth alkali fatty acid salts, like the calcium fatty acid salt, e.g. the calcium stearate, optionally second nucleating agent (NU2), optionally optical brightener (OB) and additional additives, which might contain in low amounts of polymeric carrier material. However this polymeric carrier material is not more than 10 wt.-%, preferably not more than 5 wt.-%, present in the polymer composition, based on the total weight of polymer composition. Moreover this polymeric carrier material is different to the polypropylene (PP) and the second nucleating agent (NU2). In a specific embodiment, if polymeric carrier material is present, said polymeric carrier material is an ethylene homopolymer and/or a propylene homopolymer, the latter being preferred.

According to another embodiment the polypropylene (PP) is the only polymer present in the polymer composition.

It should be noted that the polypropylene (PP) employed according to the present application may be commercially available, so that it is not necessary to first manufacture a polypropylene in order to execute the present invention.

The nucleating agent (NU)

The polypropylene composition comprises a first nucleating agent (NU1) as an essential component and optionally a second nucleating agent (NU2) different to the first nucleating agent (NU1).

The term "nucleating agent" denotes a compound or composition which is added to increase the crystallization rate of a polymer resulting in an increased degree of crystallinity and usually a smaller crystal size. According to this invention the nucleating agent is an alpha nucleating agent.

The first nucleating agent (NU1) has the structure,

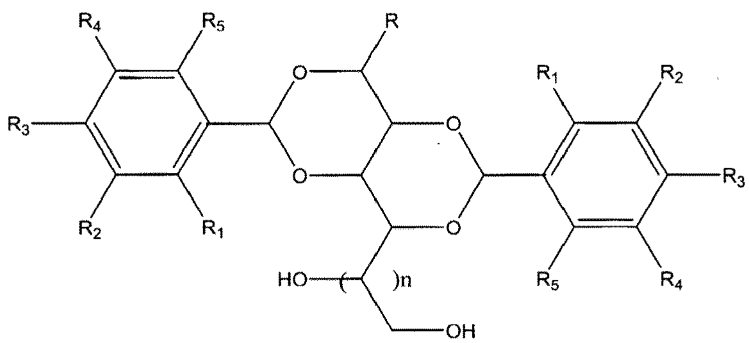

wherein R is independently selected from the group consisting of hydrogen, alkyl, alkenyl, alkynyl, alkoxy, aryloxy, hydroxyalkyl, alkyl halide cycloalkyl, cycloalkenyl, aryl, substituted aryl, and combinations thereof, and wherein $R_1$ to $R_5$ are independently selected from the group consisting of hydrogen, alkyl, alkenyl, alkynyl, alkoxy, aryloxy, hydroxyalkyl, cycloalkyl, cycloalkenyl, aryl, substituted aryl, halide, amino and thioether and combinations thereof, and optionally any adjacent $R_1$ to $R_5$ are linked together to form a 5-membered or 6-membered ring, and wherein n is an integer from 0 to 2, preferably an integer from 1 to 2, more preferably n is 1.

Preferably, R is selected from the group consisting of hydrogen, methyl, ethyl, iso-propyl, n-butyl, sec-butyl, iso-butyl and tert-butyl, and $R_1$ to $R_5$ are independently selected from the group consisting of hydrogen, chlorine, methyl, ethyl, n-propyl, iso-propyl, n-butyl, sec-butyl, iso-butyl and tert-butyl, and n is 1.

Still more preferably, R is hydrogen and $R_1$ to $R_5$ are independently selected from the group consisting of hydrogen, chlorine, methyl, ethyl, n-propyl, iso-propyl, n-butyl, sec-butyl, iso-butyl and tert-butyl, and n is 1.

Yet more preferably, R is hydrogen and $R_1$ to $R_5$ are independently selected from the group consisting of hydrogen, chlorine, methyl, ethyl, and tert-butyl, and n is 1.

It should be noted that although only the 1,3:2,4 isomer is represented, this structure is provided for convenience and illustration only and the invention is not limited to only isomers of the 1,3:2,4 type, but includes any other isomers, such as the 3,5:4,6 type or the 2,4:3,5 type.

Even more preferably the first nucleating agent (NU1) is selected from the group consisting of 1,3 : 2,4 bis(dibenzylidene)sorbitol, 1,3 : 2,4 bis(4-methylbenzylidene)sorbitol, 1,3 : 2,4 bis(4-ethylbenzylidene)sorbitol, 1,3 : 2,4 bis(3,4-dimethylbenzylidene)sorbitol, and 1,3 : 2,4 bis(3-chloro-benzylidene) sorbitol.

Yet even more preferably the first nucleating agent (NU1) is 1,3 : 2,4 bis(3,4-dimethylbenzylidene)sorbitol.

The polymer composition preferably comprises the first nucleating agent (NU1) in an amount of equal or below 0.500 wt.-%, preferably equal or below 0.300 wt.-%, more preferably equal or below 0.250 wt.-%, like in the range of 0.0001 to 0.5000 wt.-%, preferably in the range of 0.0001 to 0.3000 wt.-%, more preferably in the range of 0.0100 to 0.3000 wt.-%, even more preferably 0.1000 to 0.2500 wt.-%, based on the weight of the polymer composition.

The polypropylene composition may comprise a second nucleating agent (NU2) different to the first nucleating agent (NU1). Typical examples of nucleating agents that can be applied as the second nucleating agent (NU2) are salts of monocarboxylic acids and polycarboxylic acids, for example sodium benzoate, phosphorous-based compounds, for instance mono-, bis- or tetraphenyl phosphates, for example sodium 2,2'-methylene bis-(4,6-di-*tert*-butylphenyl) phosphate or hydroxybis (2,4,8,10-tetra-*tert*-butyl-6-hydroxy-12H-dibenzo(d,g)(1,3,2) dioxaphosphocin 6-oxidato) aluminium, or any mixtures, as well as polymeric nucleating agent.

It is preferred that the second nucleating agent (NU2) is a polymeric nucleating agent, more preferably a polymer of vinyl compound, in particular a polymeric nucleating agent obtainable by polymerising vinylcycloalkane monomers or vinylalkane monomers.

The polymeric nucleating agent is preferably a polymerized vinyl compound according to the following formula

$$CH_2=CH-CHR_1R$$

wherein $R_1$ and $R_2$ together form a 5- or 6-membered saturated, unsaturated or aromatic ring, optionally containing substituents, or independently represent an alkyl group comprising 1 to 4 carbon atoms, whereby in case $R_1$ and $R_2$ form an aromatic ring, the hydrogen atom of the - $CHR_1R_2$ moiety is not present.

Even more preferably, the polymeric nucleating agent is selected from vinyl cycloalkane polymer, in particular vinyl cyclohexane (VCH) polymer, vinyl cyclopentane polymer, 3-methyl-1-butene polymer and vinyl-2-methyl cyclohexane polymer. The most preferred polymeric nucleating agent applied as the second nucleating agent (NU2) is vinyl cyclohexane (VCH) polymer.

The amount of the second nucleating agent (NU2) present in the polymer composition is equal or below 1.0 wt.-%, more preferably equal or below 0.5 wt.-%, even more preferably equal or below 0.3 wt.-%, yet even more preferably equal or below 0.2 wt.-%,like in the range of 0.00001 to 1.00000 wt.-%, preferably in the range of 0.00001 to 0.50000 wt.-%, more preferably in the range of 0.00001 to 0.30000 wt.-%, even more preferably in the range of 0.00001 to 0.10000 wt.-%, yet even more preferably in the range of 0.00010 to 0.05000 wt.-%, based on the weight of the polymer composition.

Accordingly in one preferred embodiment the polymer composition comprises a vinylcyclohexane (VCH) polymer as the second nucleating agent (NU2) in an amount of equal or below 1.0 wt.-%, more preferably equal or below 0.5 wt.-%, even more preferably equal or below 0.3 wt.-%, yet even more preferably equal or below 0.2 wt.-%, like in the range of 0.00001 to 1.00000 wt.-%, preferably in the range of 0.00001 to 0.50000 wt.-%, more preferably in the range of 0.00001 to 0.30000 wt.%, even more preferably in the range of 0.00001 to 0.10000 wt.-%, yet even more preferably in the range of 0.00010 to 0.05000 wt.-%, based on the weight of the polymer composition.

The first nucleating agent (NU1) and the second nucleating agent (NU2) respectively may be introduced to the polymer composition during the polymerisation process of the polypropylene (PP) or at a later stage, for example by a post polymerization processes, including admixing first nucleating agent (NU1) and the second nucleating agent (NU2) respectively, using the master batch technology.

It is preferred that the second nucleating agent (NU2) is introduced to the polymer compositing during the polymerisation process of the polypropylene (PP). The second nucleating agent (NU2) is preferably introduced to the polypropylene (PP), by first polymerising the above defined vinyl compound, even more preferably vinyl cyclohexane (VCH), in the presence of a catalyst system comprising a solid catalyst component, preferably a solid Ziegler Natta catalyst component, a cocatalyst and optional external donor, and the obtained reaction mixture of the polymer of the vinyl compound as defined above, even more preferably vinyl cyclohexane (VCH) polymer, and the catalyst system is then used for producing the polypropylene (PP).

It is appreciated that the polypropylene (PP) and optionally the second nucleating agent (NU2), preferably a

polymeric nucleating agent defined above, are the only polymers present in the polymer composition.

The polypropylene composition may comprise additional nucleating agents such as talc, alongside the first nucleating agent (NU1) and optionally the second nucleating agent (NU2). However, according to a preferred embodiment the first nucleating agent (NU1) and the second nucleating agent (NU2) are the only nucleating agents present in the polymer composition. According to another preferred embodiment the first nucleating agent (NU1) is the only nucleating agent present in the polymer composition.

**The zinc fatty acid salt and optional earth alkali fatty acid salts**

The polypropylene composition according to the present invention musr comprises a zinc fatty acid salt as an essential component.

As indicated above acetals of sorbitol exhibit a poor solubility in polypropylene and process temperatures of more than 220 °C are required to dissolve sufficient amounts. It has surprisingly been found that by using zinc fatty acid salt, like zinc stearate, in the polymer composition according to the present invention, the dissolution properties of sorbitol acetals, i.e. of the first nucleating agent (NU1), in polypropylene (PP) can be significantly improved. In particular, it has surprisingly been found that by including zinc fatty acid salt, like zinc stearate, in a specific amount the process temperatures required to dissolve a sufficient amount of sorbitol acetals, i.e. of the first nucleating agent (NU1), in the polypropylene (PP) can significantly be reduced, thus, resulting in improved process efficiency while the visual appearance of the polymer composition as well as the articles prepared therefrom is markedly improved.

Accordingly the inventive polymer composition must include zinc fatty acid salt(s), like zinc sterate. The inventive polymer composition may comprise in addition to the zinc fatty acid salt(s), like the zinc sterate, also earth alkali fatty acid salts. In other words the polymer composition may also comprise a mixture of different (earth alkali) fatty acid salts with the proviso that zinc fatty acid salt, like zinc sterate, is present in polymer composition.

Preferably the zinc fatty acid salt is a zinc salt of a $C_{12}$ to $C_{26}$ fatty acid, more preferably a zinc salt of a $C_{14}$ to $C_{24}$ fatty acid, even more preferably a zinc salt of a $C_{18}$ to $C_{22}$ fatty acid, yet more preferably a zinc sal of a $C_{18}$ fatty acid, e.g. zinc stearate. Furthermore, it is appreciated that the zinc fatty acid salt is a zinc salt of a saturated fatty acid, in particular of a non-branched saturated fatty acid, as defined in this paragraph.

Preferably the earth alkali fatty acid salts (in addition to the zinc fatty acid salt) - if present in the polymer composition - are earth alkali salts of a $C_{12}$ to $C_{26}$ fatty acid, more preferably earth alkali salts of a $C_{14}$ to $C_{24}$ fatty acid, even more preferably earth alkali salts of a $C_{18}$ to $C_{22}$ fatty acid, yet more preferably earth alkali salts of a $C_{18}$ fatty acid, e.g. of stearic acid.

The cation of these earth alkali fatty acid salts is preferably selected from calcium and/or magnesium, preferably is calcium. Furthermore, it is appreciated that the earth alkali fatty acid is an earth alkali fatty acid of a saturated fatty acid, in particular of a non-branched saturated fatty acid, as defined in this paragraph.

Accordingly in one embodiment the polymer composition comprises a mixture of a zinc fatty acid salt as defined above, like zinc stearate, and at least one earth alkali fatty acid salt as defined above. It is in particulat preferred that the polymer composition comprises a zinc fatty acid salt as defined above, like zinc stearate, and calcium fatty acid salt, like calcium stearate. Still more prefereably the polymer composition comprises a zinc fatty acid salt, like zinc stearate, and calcium fatty acid salt, like calcium stearate, as the only earth alkali fatty acid salts, like as the only fatty acid salts.

In one specific embodiment the polymer composition comprises the zinc fatty acid salt as defined above, like zinc stearate, as the only earth alkali fatty acid salt, like as the only fatty acid salt.

The total amount of zinc fatty acid salt as defined above, like zinc stearate, and optional earth alkali fatty acid salts, like calcium fatty acid salt, e.g. calcium stearate, together in the polymer composition is of equal or less than 0.5 wt.-% (like equal or less 0.5000 wt.-%, preferably of equal or less than 0.2 wt.-% (like equal or less 0.2000 wt.-%), more preferably of equal or less than 0.1 wt.-% (like equal or less 0.1100 wt.-%), even more preferably in an amount of equal or less than 0.05 wt.-% (like equal or less 0.0500 wt.-%), like in the range of 0.001 to 0.150 wt.-%, preferably in the range of 0.005 to 0.100 wt.-%, more preferably in the range of from 0.008 to 0.07 wt.-%, even more preferably in the range of 0.01 to 0.06 wt.-%, and most preferred in the range of 0.04 to 0.06 wt.-%, based on the weight of the polymer composition.

Preferably the weight ratio between the zinc fatty acid salt as defined above, like zinc stearate, and the earth alkali fatty acid salts, like calcium fatty acid salt, e.g. calcium stearate, is 20/80 to 80/20, more preferably 30/70 to 70/30, yet more preferably 40/60 to 60/40, like 45/55 to 55/45.

Preferably the total amount of the zinc fatty acid salt, like zinc stearate, in the polymer composition is from 0.008 to 0.150 wt.-%, more preferably from 0.010 to 0.100 wt.-%, yet more preferably from 0.03 to 0.07 wt.-%, and even more preferably from 0.040 to 0.060 wt.-%.

The zinc fatty acid salt, like the zinc stearate, and the optional earth alkali fatty acid salt(s) can be introduced during the polymerisation process of the polypropylene (PP). However, it is preferred to introduce them into the polymer composition at a later stage, for example by a post polymerization processes, including admixing the zinc fatty acid salt, like the zinc stearate, and the optional earth alkali fatty acid salt(s) preferably by using dry blends or the master batch

technology. It is also possible to introduce the zinc fatty acid salt, like the zinc stearate, and the optional earth alkali fatty acid salt(s) to the polymer composition together with the first nucleating agent (NU1) in form of dry blends or a master batch.

**The optical brightener (OB)**

The tendency of many polymers to yellow is a result of degradation. The breakdown products absorb blue light, giving a yellow appearance in daylight. Optical brighteners are colorless or slightly colored organic compounds that are designed to brighten colors or mask yellowing in lacquers, paints, inks, polymers and fibers. They work via a fluorescent mechanism, absorbing light in the ultraviolet and violet region of the electromagnetic spectrum and emitting it in the blue range of the visible spectrum, resulting in a brighter, fresher appearance.

The term "optical brightener" denotes organic small molecules of 20-100 atoms comprising a conjugated $\pi$-system of aromatic groups, or plane or cyclic molecules with several $\pi$ bonds and optionally at least one heteroatom selected from the group consisting of oxygen, nitrogen, sulfur, phosphor and selenium, preferably selected from oxygen, nitrogen and sulfur.

The optical brightener (OB) is a organic small molecule of 20 - 100 atoms comprising a conjugated $\pi$-system of aromatic groups, or plane or cyclic groups with several $\pi$ bonds, with at least on moiety selected from the group consisting of triazine-stilbene, coumarin, imidazoline, diazole, triazole, benzoxazoline, biphenyl-stilbene and oxazole, preferably with at least on moiety selected from the group consisting of oxazole and/or benzoxazole.

According to an embodiment the optical brightener (OB) is selected from the group consisting of ethoxylated 1, 2-(benzimidazolyl)ethylene, 2-styrylnaphth[1,2d]-oxazole, 1,2-bis(5' methyl-2-benzoxazolyl)ethylene, 4,4'-bis [4"-bis(2"-hydroxymethyl)amino-6"(3"-sulphophenyl)amino-1", 3", 5"-triazin-2"-yl amino]-2,2'-stilbenedisulphonate, 4-methyl-7-dimethyl aminocoumarin, alkoxylated 4,4'-bis-(benzimidazolyl)stilbene, 2-(5-chlorobenzo[d]oxazol-2-yl)acetonitrile, 2,2'-(4,4'-diphenolvinyl)dibenzoxazol, 1,4-bis-benzoxazolyl-naphthalene, 1,4-bis(2-benzoxazolyl)napthalene, 5-methyl-2,2'-(vinylenedi-p-phenylene)bisbenzoxazole, 2,2'-(1,2-ethenediyldi-4,1-phenylene)bisbenzoxazole and/or 2,5-bis(5-tert-butylbenzooxazol-2-yl)thiophene.

According to another embodiment the optical brightener (OB) is selected from the group consisting of 2-(5-chlorobenzo[d]oxazol-2-yl)acetonitrile, 2,2'-(4,4'-diphenol vinyl)dibenzoxazol, 1,4-bis(2-benzoxazolyl)napthalene, 5-methyl-2,2'-(vinylenedi-p-phenylene)bisbenzoxazole, 2,2'-(1,2-ethenediyldi-4,1-phenylene)bisbenzoxazole and/or 2,5-bis(5-tert-butylbenzooxazol-2-yl)thiophene.

According to a preferred embodiment the optical brightener (OB) is 2,5-bis(5-tert-butylbenzooxazol-2-yl)thiophene.

The polymer composition may comprise the optical brightener (OB) in an amount of equal or below 0.100 wt.-%, preferably in an amount of equal or below 0.010 wt.-%, more preferably in an amount of equal or below 0.0050 wt.-%, even more preferably in an amount of equal or below 0.0010, like in the range of 0.0001 to 0.1000 wt.-%, preferably in the range of 0.0001 to 0.0100 wt.-%, more preferably in the range of 0.0001 to 0.0050 wt.-%, even more preferably in the range of 0.0001 to 0.0015 wt.-%, yet even more preferably in the range of 0.0003 to 0.0010 wt.-%, based on the weight of the polymer composition.

The optical brightener (OB) can be introduced during the polymerisation process of the polypropylene (PP). However, it is preferred to introduce the optical brightener (OB) at a later stage, for example by a post polymerization processes, including admixing the optical brightener (OB) preferably by using the master batch technology.

**The polymer composition**

The polymer composition comprises polypropylene (PP), first nucleating agent (NU1), zinc fatty acid salt, like the zinc stearate, optionally earth alkali fatty acid salt(s), optionally second nucleating agent (NU2), and optionally optical brightener (OB), as described above or below. In a preferred embodiment the polymer consists of polypropylene (PP), first nucleating agent (NU1), zinc fatty acid salt, like zinc stearate, optionally earth alkali fatty acid salt(s), optionally second nucleating agent (NU2), optionally optical brightener (OB), and optionally additives as described above or below.

The polymer composition may comprise polypropylene (PP) in an amount of at least 95.0 wt.-%, preferably in an amount of at least 98.0 wt.-%, more preferably in an amount of at least 99.0 wt.-%, like in the range of 95.0 to 99.8 wt.-%, preferably in the range of 98.0 to 99.8 wt.-%, even more preferably in the range of 98.5 wt.-% to 99.8, based on the weight of the polymer composition.

The polymer composition comprises the first nucleating agent (NU1) in an amount of equal or below 0.5 wt.-%, preferably in an amount of equal or below 0.3 wt.-%, more preferably in an amount of equal or below 0.2 wt.-%, like in the range of 0.0001 to 0.5000 wt.-%, preferably in the range of 0.0001 to 0.3000 wt.-%, more preferably in the range of 0.0100 to 0.3000 wt.-%, even more preferably in the range of 0.1000 to 0.3000 wt.-%, based on the weight of the polymer composition.

The polymer composition may comprise the second nucleating agent (NU2) in an amount of equal or below

1.0 wt.-%, more preferably in an amount of equal or below 0.5 wt.-%, even more preferably in an amount of equal or below 0.3 wt.-%, yet even more preferably in an amount of equal or below 0.2 wt.-%, like in the range of 0.00001 to 1.00000 wt.-%, preferably in the range of 0.00001 to 0.50000 wt.-%, more preferably in the range of 0.00001 to 0.30000 wt.-%, even more preferably in the range of 0.00001 to 0.10000 wt.-%, yet even more preferably in the range of 0.00010 to 0.05000 wt.-%, based on the weight of the polymer composition.

The polymer composition may comprise the zinc fatty acid salt, like the zinc stearate, in an amount of from 0.008 to 0.150 wt.-%, more preferably from 0.010 to 0.100 wt.-%, yet more preferably from 0.03 to 0.07 wt.-%, and even more preferably from 0.040 to 0.060 wt.-%, based on the weight of the polymer composition.

The polymer composition may comprise the earth alkali fatty acid salts, like calcium fatty acid salt, e.g. calcium stearate, in an amount of from 0.008 to 0.150 wt.-%, more preferably from 0.010 to 0.100 wt.-%, yet more preferably from 0.03 to 0.07 wt.-%, and even more preferably from 0.040 to 0.060 wt.-%, based on the weight of the polymer composition.

Thus the total amount of zinc fatty acid salt as defined above, like zinc stearate, and optional earth alkali fatty acid salts, like calcium fatty acid salt, e.g. calcium stearate, together in the polymer composition is of equal or less than 0.5 wt.-% (like equal or less 0.5000 wt.-%), preferably of equal or less than 0.2 wt.-% (like equal or less 0.2000 wt.-%), more preferably of equal or less than 0.1 wt.-% (like equal or less 0.1100 wt.-%), even more preferably in an amount of equal or less than 0.05 wt.-% (like equal or less 0.0500 wt.-%), like in the range of 0.001 to 0.150 wt.-%, preferably in the range of 0.005 to 0.100 wt.-%, more preferably in the range of from 0.008 to 0.07 wt.-%, even more preferably in the range of 0.01 to 0.06 wt.-%, and most preferred in the range of 0.04 to 0.06 wt.-%, based on the weight of the polymer composition.

The polymer composition may comprise the optical brightener (OB) in an amount of equal or below 0.100 wt.-%, preferably in an amount of equal or below 0.010 wt.-%, more preferably in an amount of equal or below 0.0050 wt.-%, even more preferably in an amount of equal or below 0.0010, like in the range of 0.0001 to 0.1000 wt.-%, preferably in the range of 0.0001 to 0.0100 wt.-%, more preferably in the range of 0.0001 to 0.0050 wt.-%, even more preferably in the range of 0.0001 to 0.0015 wt.-%, yet even more preferably in the range of 0.0003 to 0.0010 wt.-%, based on the weight of the polymer composition.

Moreover, the propylene composition of the invention may contain further additives different to those defined above. The further additives different to those defined above are preferably selected from the group of modifiers and stabilizers such as stabilizers, antistatic agents, lubricants, pigments and combinations thereof. Specifically, such additives include primary antioxidants like sterically hindered phenols and secondary antioxidants like phosphites, UV stabilizers like sterically hindered amines, acid scavengers, carbon black, pigment, antistatic agents like glycerol monostearate, slip agents like oleamide. Such additives are generally commercially available and are described, for example, in "Plastic Additives Handbook", 5th edition, 2001 of Hans Zweifel.

The total amount of optional further additives different to the first nucleating agent (NU1), the second nucleating agent (NU2), the zinc fatty acid salt as defined above, like the zinc stearate, the earth alkali fatty acid salts, like calcium fatty acid salt, e.g. calcium stearate, and the optical brightener (OB) is preferably between 0.0001 and 10.0000 wt.-%, preferably 0.0001 and 5.0000 wt.-%, preferably 0.0001 and 2.5000 wt.-%, more preferably between 0.0001 and 1.5000 wt.-%, still more preferably between 0.0001 and 1.0000 wt.-%, based on the weight of the polymer composition.

It is especially preferred that polymer composition consists of polypropylene (PP), first nucleating agent (NU1), the zinc fatty acid salt as defined above, like the zinc stearate, optionally earth alkali fatty acid salts, like the calcium fatty acid salt, e.g. the calcium stearate, optionally optical brightener (OB), optionally second nucleating agent (NU2) and optionally further additives, all as defined above.

A further characteristic of the polymer composition is the melting behavior. Accordingly it is appreciated that the polymer composition has a melting temperature ($T_m$) measured by differential scanning calorimetry (DSC) of at least 130.0 °C, more preferably of at least 150 °C, even more preferably of at least 151 °C, like in the range of 130 to 200 °C, preferably in the range of 140 to 170 °C, even more preferably in the range of 150 to 155 °C.

Further it is appreciated that the polymer composition has crystallization temperature (Tc) measured by differential scanning calorimetry (DSC) of at least 100 °C, more preferably of at least 105 °C. Accordingly the polymer composition has preferably a crystallization temperature ($T_c$) measured by differential scanning calorimetry (DSC) in the range of 100 to 130°C, more preferably in the range of 105 to 125 °C, even more preferably in the range of 115 to 121 °C.

The inventive polymer composition exhibits an excellent visual appearance. In particular the inventive polymer composition exhibits a low haze value.

Accordingly the polymer composition according to this invention has a haze in the range from 20 to 40 %, preferably 25 to 35 %, more preferably in the range of 20 to 30 %, wherein the haze is measured according to ASTM D 1003-07 on 60 x 60 $mm^2$ plaques thickness of 2 mm prepared according to EN ISO 1873-2 at a processing temperature of the plaques of 190°C. A haze value in the range of 20 to 30 %, like 22 to 28 %, is in particular achieved in case the zinc fatty acid salt, like zinc stearate, is alone present, i.e. no other (earth alkali) fatty acid salts are present in the polymer composition.

Additionally it is preferred that the polymer composition according to this invention has yellowness index in the range of -20 to 15, preferably from -15 to 5 as determined according to ASTM E313 preferably on 60 x 60 $mm^2$ plaques thickness of 2 mm prepared according to EN ISO 1873-2 at a processing temperature of the plaques of 190°C.

Furthermore, the inventive polymer composition can be processed with improved efficiency. In particular the inventive polymer composition can be processed at reduced processing temperatures.

A crucial factor in this respect is the addition of specific nucleating agents in combination with specific fatty acid salts. It has surprisingly been found that the visual appearance and the processing efficiency of a polymer composition comprising polypropylene can be improved when the first nucleating agent (NU1) is present in combination with zinc fatty acid salt, like zinc stearate, in particular when the first nucleating agent (NU1) and the zinc fatty acid salt, like zinc stearate, are present in a specific ratio to each other.

In a preferred embodiment the first nucleating agent (NU1) and the zinc fatty acid salt, like the zinc stearate, fulfill together the inequation (Ia), preferably inequation (Ib), more preferably inequation (Ic), even more preferably inequation (Id), still yet more preferably inequation (Ie)

$$\frac{W\,(NU1)}{W\,(EAF)} \leq 100 \qquad (Ia)$$

$$100 \geq \frac{W\,(NU1)}{W\,(EAF)} \geq 0.5 \qquad (Ib)$$

$$30 \geq \frac{W\,(NU1)}{W\,(EAF)} \geq 1.0 \qquad (Ic)$$

$$25 \geq \frac{W\,(NU1)}{W\,(EAF)} \geq 1.5 \qquad (Id)$$

$$20 \geq \frac{W\,(NU1)}{W\,(EAF)} \geq 2.0 \qquad (Ie)$$

wherein "W (NU1)" is the weight [wt.-%] of the first nucleating agent (NU1), based on the weight of the polymer composition and "W (EAF)" is the weight [wt.-%] of the zinc fatty acid salt, like the zinc stearate, based on the weight of the polymer composition.

The polymer composition can be prepared by belinding, especially by melt blending, the polypropylene (PP), the first nucleating agent (NU1), the zinc fatty acid salt as defined above, like the zinc stearate, optionally the earth alkali fatty acid salts, like the calcium fatty acid salt, e.g. the calcium stearate, optionally the second nucleating agent (NU2), optionally the optical brightener (OB) and optionally further additives, all as defined above and below.

The melt blending is preferably accomplished at temperatures at which the first nucleating agent (NU1) dissolves in the polypropylene (PP), i.e. typically at temperatures between 210 to 240 °C, like between 220 to 230 °C.

For melt blending the individual components of the polymer composition, a conventional compounding or blending apparatus, e.g. a Banbury mixer, a 2-roll rubber mill, Buss-cokneader or a twin screw extruder may be used. Preferably, mixing is accomplished in a corotating twin screw extruder. The polymer composition recovered from the extruder is then preferably further processed, to generate an article as defined herein.

The polymer composition can be in particular prepared by feeding the polypropylene (PP), the first nucleating agent (NU1), the zinc fatty acid salt as defined above, like the zinc stearate, optionally earth alkali fatty acid salts, like the calcium fatty acid salt, e.g. the calcium stearate, optionally the second nucleating agent (NU2), optionally the optical brightener (OB) and optionally further additives, all as defined above and below, from different hoppers into the melt blending apparatus (e.g. the extruder). However, it is also possible to feed more than one compound from a single hopper.

According to an embodiment the first nucleating agent (NU1), the zinc fatty acid salt as defined above, like the zinc stearate, optionally earth alkali fatty acid salts, like the calcium fatty acid salt, e.g. the calcium stearate, optionally the second nucleating agent (NU2), optionally the optical brightener (OB) and optionally further additives, all as defined above and below, are blended forming a pre-blend and the pre-blend is subsequently melt blended with the polypropylene (PP), as defined above and below, forming the polymer composition.

**The article**

According to another aspect the invention is directed to the article which is obtained by the process according to the present invention. Preferably, the article has thickness from 0.3 mm to 5.0 mm, preferably from 0.4 to 3.5 mm, more preferably from 0.5 to 2.0 mm.

The article according to the present invention comprises the polymer composition as defined above. The amount of the polymer composition in the article is at least 70 wt.-%, more preferably at least 90 wt.-%, even more preferably at least 95 wt.-%, yet even more preferably at least 99 wt.-%. According to a preferred embodiment the article consists of the polymer composition.

In another preferred embodiment, the article does not comprise (a) further polymer(s) different to the polymers present in the polymer composition, i.e. different to the polypropylene (PP) and optionally the second nucleating agent (NU2), in an amount exceeding in total 10 wt.-%, preferably exceeding in total 5 wt.-%, based on the total weight of the article. Typically if an additional polymer is present, such a polymer is a carrier polymer for additives and thus does not contribute to the improved properties of the article. Accordingly in one specific embodiment the article, consists of the polymer composition as defined herein and additional additives, which might contain in low amounts of polymeric carrier material. However this polymeric carrier material is present in the article in amounts of not more than 10 wt.-%, preferably not more than 5 wt.-%, based on the total weight of the article. Moreover, this polymeric carrier material is different to the polypropylene (PP) and the second nucleating agent (NU2), which are the polymer components of the polymer composition. In a specific embodiment, if polymeric carrier material is present, said polymeric carrier material is an ethylene homopolymer and/or a propylene homopolymer different to the polypropylene (PP) and the second nucleating agent (NU2). In one particular preferred embodiment the article consists only of the polymer composition as defined herein.

The article obtained by the process according to the present invention can have a broad range of thicknesses. Due to the use and the presence of the combination of the first nucleating agent 1 (NU1) and the zinc fatty acid salt, like the zinc stearate, as defined herein in the polymer composition according to the present invention, thin articles as well as unusually thick articles can be prepared from the polymer composition with excellent visual appearance e.g. in terms of haze and yellowness index.

The article is preferably applied in packaging applications, such as packaging for adhesives, packaging for cosmetics, packaging for pharmaceuticals and the like, automotive applications, such as side trims, step assists, body panels, spoilers, dashboards, interior trims and the like, medical applications such as such as syringes, catheters, needle hubs, needle protectors, inhalers, filter housings, blood collection systems and the like and house ware applications such as plastic containers, detergent cartons, cup and plate boards for oven or microwave use and the like.

In an embodiment the article is a thin-wall article, preferably a thin-wall article with a wall thickness of equal or below 5.0 mm, preferably of equal or below 3.0 mm, more preferably of equal or below 1.5 mm, even more preferably of equal or below 1.0 mm, like in the range of 0.3 to 5.0 mm, preferably in the range of 0.4 to 3.5 mm, more preferably in the range of 0.5 to 2.5 mm, even more preferably in the range of 0.6 to 1.5 mm.

It is appreciated that the article is a thin-wall house ware article such as a thin-wall plastic container, a thin-wall detergent carton, a thin-wall cup and plate, a thin-wall board for oven or microwave use and the like. In particular it is appreciated that the article is a thin-wall house ware article such as a thin-wall plastic container, a thin-wall detergent carton, a thin-wall cup and plate, a thin-wall board for oven or microwave use and the like, with a wall thickness of equal or below 5.0 mm, preferably of equal or below 3.0 mm, more preferably of equal or below 1.5 mm, even more preferably of equal or below 1.0 mm, like in the range of 0.3 to 5.0 mm, preferably in the range of 0.4 to 3.0 mm, more preferably in the range of 0.5 to 1.5 mm, even more preferably in the range of 0.6 to 1.0 mm.

The present invention provides the specific advantage that such articles with excellent optical properties may be produced at lower processing temperatures than hitherto known due to the combination of the first nucleating agent (NU1) and the zinc fatty acid salt, like the zinc stearate, as defined herein, in particular due to the combination of specific amounts of the first nucleating agent (NU1) and specific amounts of the zinc fatty acid salt, like the zinc stearate, as defined herein.

Particularly, the articles obtained by the process of the present invention will have unusual low haze values and/or low yellowness index.

According to another aspect the present invention is directed to an article, wherein the article has

(a) a haze in the range from 20 to 40 %, preferably 25 to 35 %, wherein the haze is measured according to ASTM D 1003-07 on 60 x 60 $mm^2$ plaques thickness of 2 mm prepared according to EN ISO 1873-2 at a processing temperature of the plaques of 190°C,
and/or
(b) yellowness index in the range of -20 to 15, preferably from -15 to 5,
and/or
(c) thickness from 0.3 mm to 5.0 mm, preferably from 0.4 to 3.5 mm, more preferably from 0.5 to 2.0 mm.

For instance, haze values of the articles prepared according to the present invention and when measured as defined in the previous paragraph will be not higher than 40, preferably not higher than 35, more preferably not higher than 30, even more preferably not higher than 28, and most preferably not higher than 27. Haze values will be in the range from 15 to 40, more preferably in the range of in the range of 20 to 35, even more preferably in the range of 22 to 32, and most preferably in the range of 23 to 30.

Alternatively or additionally, the yellowness index of the articles prepared according to the present invention and when measured as defined herein will be not higher than 15, preferably not higher than 10, more preferably not higher than 5, even more preferably not higher than 3, and most preferably not higher than 0. Yellowness index will be in the range from -15 to 15, more preferably in the range of -10 to 10, more preferably in the range of -8 to 5, even more preferably from -5 to 3, and most preferably in the range of -2 to 0.8.

**The use**

According to another aspect the present invention is directed to the use of zinc fatty acid salt, preferably zinc stearate, in a process for processing the present polymer composition at a temperature of not higher than 250°C, preferably not higher than 230°C, more preferably not higher than 220°C, still more preferably not higher than 210°C, yet more preferably not higher than 200°C, still yet more preferably not higher than 195 °C, like not higher than 190°C to form an article, preferably a molded article from said polymer composition, said article having reduced haze relative to the same article formed in the absence of said zinc fatty acid salt, wherein haze is measured according to ASTM D 1003-07 on 60 x 60 $mm^2$ plaques having thickness of 2 mm prepared according to EN ISO 1873-2 at a processing temperature of the plaques of 190°C., wherein the reduction of haze preferably is at least 5%, preferably by at least 10%, more preferably by at least 15 %, even more preferably by at least 25 %, and most preferably by at least 35%.

Further preferred ranges for the temperatures at which such use has been carried out have been already indicated above.

**General remark**

In another preferred embodiment, the claimed process as well as the claimed article and the claimed use of zinc fatty acid salt, preferably zinc stearate, of the present invention can optionally exclude the process, the article and the claimed use of the zinc fatty acid salt, preferably zinc stearate, with respect to the following three selected polymer compositions that are summarized in the following table I, more preferably are summarized in the following table Ia:

table I:

| Polymer composition | | Embodiment 1' | Embodiment 2' | Embodiment 3' |
|---|---|---|---|---|
| PP | [wt.-%] | 99.558 | 99.718 | 99.581 |
| NU1 | [wt.-%] | 0.1820 | 0.1240 | 0.1595 |
| EAF | [wt.-%] | 0.0100 | 0.0080 | 0.0100 |
| OD | [wt.-%] | 0.0001 | 0 | 0.0001 |

table Ia:

| Polymer composition | | Embodiment 1' | Embodiment 2' | Embodiment 3' |
|---|---|---|---|---|
| PP | [wt.-%] | 99.500 to 99.600 | 99.700 to 99.800 | 99.500 to 99.600 |
| NU1 | [wt.-%] | 0.1800 to 0.1900 | 0.1200 to 0.1300 | 0.1500 to 0.1600 |
| EAF | [wt.-%] | 0.0050 to 0.0150 | 0.0050 to 0.0150 | 0.0050 to 0.0150 |
| OD | [wt.-%] | 0.0001 to 0.0002 | 0 to 0.0002 | 0.0001 to 0.0002 |

wherein

PP is a random propylene ethylene copolymer, with a $MFR_2$ (230°C, 2.16 kg) of 30 g/10min and an ethylene content of 3.4 wt.-%, preferably is the random propylene ethylene copolymer with a $MFR_2$ (230°C, 2.16 kg) of 30 g/10min and an ethylene content of 3.4 wt.-% commercially available as RG468MO of Borouge, still more preferably is the

random propylene ethylene copolymer with a $MFR_2$ (230°C, 2.16 kg) of 29 to 31 g/10min and an ethylene content of 3.3 to 3.5 wt.-%,

OB is an optical brightner, preferably is 2,5-bis(5-tert-butylbenzoxazol-2-yl)thiophene (CAS-no. 7128-64-5), still more preferably is 2,5-bis(5-tert-butylbenzoxazol-2-yl)thiophene (CAS-no. 7128-64-5) commercially available as Tinopal OB of BASF AG.

NU1 is 1,3 : 2,4-bis(3,4-dimethylbenzylidene)sorbitol (CAS-no.135861-56-2), preferably is the commercially 1,3 : 2,4-bis(3,4-dimethylbenzylidene)sorbitol (CAS-no.135861-56-2) Millad 3988 of Milliken.

EAF is zinc stearate, preferably is the zinc stearate commercially available as Zinc Stearate, Pure, from Nimbasia.

Still more preferably the remaining parts to 100 wt.-% of the embodiments 1' to 3'are preferably additives, like penta-erythrityltetrakis(3-(3',5'-di-tert. butyl-4-hydroxyphenyl)-propionate and tris (2,4-di-*t*-butylphenyl)phosphite.

The invention will now be described in further detail by the examples provided below.

## EXAMPLES

### 1. Measuring methods

The following definitions of terms and determination methods apply for the above general description of the invention as well as to the below examples unless otherwise defined.

### Quantification of microstructure by NMR spectroscopy

Quantitative nuclear-magnetic resonance (NMR) spectroscopy is used to quantify the isotacticity and regio-regularity of the polypropylene homopolymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For polypropylene homopolymers approximately 200 mg of material was dissolved in *1,2*-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects

were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1- erythro regio-defects was quantified with respect to all propene:

$$[21e]\ mol.\text{-}\% = 100 * (P_{21e} / P_{total})$$

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer.

The comonomer fraction was quantified using the method of W-J. Wang and S. Zhu, Macromolecules 2000, 33 1157, through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

The mole percent comonomer incorporation was calculated from the mole fraction.

The weight percent comonomer incorporation was calculated from the mole fraction. **Melting temperature ($T_m$) and crystallization temperature ($T_c$):** measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Melting temperature and crystallization temperature is determined from the second heating step.

**$MFR_2$ (230 °C)** is measured according to ISO 1133 (230 °C, 2.16 kg load).

**Haze** is determined at a temperature of 190 C° according to ASTM D 1003-07 on 60 x 60 $mm^2$ plaques with a thickness of 2 mm prepared according to EN ISO 1873-2.

**Yellowness Index** is determined according to ASTM E313.

## 2. Examples

**Preparation of the random propylene ethylene copolymer (R-PP)**

The catalyst used in the polymerization processes of the examples was the catalyst as prepared in Example 8 of WO 2004/029112A1 (see pages 22-23), except that diethylaluminium chloride was used as an aluminium compound instead of triethylaluminium. An external donor, dicyclopentyldimethoxy silane, has been used. The ratio of aluminium to donor was 7.5.

**Table 1:** Preparation of the random propylene ethylene copolymer (R-PP)

| | | R-PP |
|---|---|---|
| **Prepoly** | | |
| Residence time | [h] | 0.6 |

(continued)

| | | R-PP |
|---|---|---|
| **Prepoly** | | |
| Temperature | [°C] | 30 |
| Donor/C3 | [g/ton] | 50 |
| Teal/C3 | [g/ton] | 160 |
| **Loop (R1)** | | |
| Residence time | [h] | 0.77 |
| Temperature | [°C] | 70 |
| $H_2/C_3$ ratio | [mol/kmol] | 10 |
| $C_2/C_3$ ratio | [mol/kmol] | 1.45 |
| MFR | [g/10min] | 30 |
| XCS | [wt%] | 6.0 |
| C2 content | [mol%] | 4.1 |
| split | [wt%] | 45 |
| **1st GPR (R2)** | | |
| Residence time | [h] | 2.1 |
| Temperature | [°C] | 82 |
| Pressure | [kPa] | 20 |
| $H_2/C_3$ ratio | [mol/kmol] | 133 |
| $C_2/C_3$ ratio | [mol/kmol] | 30 |
| MFR | [g/10min] | 30 |
| XCS | [wt%] | 6.0 |
| C2 content | [mol%] | 5.0 |
| split | [wt%] | 55 |

The samples were obtained by melt mixing the random propylene copolymer (PP) with the additives indicated in table 2 with the Coperion 18 extruder at a temperature of 225 °C.

**Table 2:** Polymer composition

| | | CE1 | CE1 | IE1 | IE2 |
|---|---|---|---|---|---|
| R-PP | [wt%] | 99,4999 | 99,5494 | 99,5021 | 99,5549 |
| Irganox 1010 | [wt%] | 0,0315 | 0,0330 | 0,0303 | 0,0315 |
| Irgafos 168 | [wt%] | 0,0630 | 0,0650 | 0,0650 | 0,0630 |
| GMS/GDS | [wt%] | 0,1415 | 0 | 0 | 0 |
| GMS | [wt%] | 0 | 0,1000 | 0,1000 | 0,1000 |
| DMDBS | [wt%] | 0,1695 | 0,2000 | 0,2000 | 0,2000 |
| Ca stearate | [wt%] | 0,0945 | 0,0520 | 0,0520 | 0 |
| Zn stearate | [wt%] | 0 | 0 | 0,0500 | 0,0500 |
| Tinopal | [wt%] | 0,0001 | 0,0006 | 0,0006 | 0,0006 |

**Irganox 1010** is tetrakis-(methylene-(3,5-di-(tert)-butyl-4-hydrocinnamate))methane(CAS 6683-19-8);
**Irgafos 168** is tris(2,4-di-(tert)-butylphenyl)phosphate(CAS 31570-04-4);
**GMS** is glyceryl monostearate commercially available
**GDS** is glyceryl distearate commercially available.
**DMDBS** is 1,3 : 2,4 bis(3,4-dimethylbenzylidene)sorbitol (CAS-no.135861-56-2), commercially available as Millad 3988 of Milliken;
**Ca stearate** commercially available as Calcium Stearate, Pure, from Nimbasia
**Zinc stearate** commercially available as Zinc Stearate, Pure, from Nimbasia;
**Tinopal** is 2,5-bis(5-tert-butylbenzoxazol-2-yl)thiophene (CAS-no. 7128-64-5) commercially available from BASF

The haze and the yellowness of the examples were determined from 60 x 60 $mm^2$ injection molded plaques with a thickness of 2 mm prepared according to ASTM D1003. The injection molding temperatures are indicated in tables 3 and 4.

**Table 3:** Haze

| | | CE1 | CE2 | IE1 | IE2 |
|---|---|---|---|---|---|
| Haze (190°C) | [%] | 60.6 | 49.3 | 33.8 | 26.6 |
| Haze (200°C) | [%] | 35.2 | 35.3 | 28.1 | 27.4 |

**Table 4:** Yellowness Index

| | | CE1 | IE1 | IE2 |
|---|---|---|---|---|
| Yellowness Index (190°C) | [-] | 6.0 | -0.5 | -0.3 |
| Yellowness Index (200°C) | [-] | 6.2 | -0.1 | -0.6 |

## Claims

1. Process for preparing an article comprising the steps of

   - providing a polymer composition including the following components,

     (i) polypropylene (PP),
     (ii) first nucleating agent (NU1) having the structure,

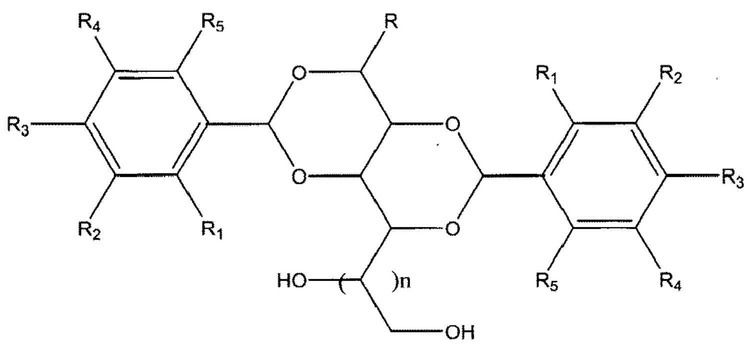

wherein R is independently selected from the group consisting of hydrogen, alkyl, alkenyl, alkynyl, alkoxy, aryloxy, hydroxyalkyl, alkyl halide cycloalkyl, cycloalkenyl, aryl, substituted aryl, and combinations thereof,
wherein $R_1$ to $R_5$ are independently selected from the group consisting of hydrogen, alkyl, alkenyl, alkynyl, alkoxy, aryloxy, hydroxyalkyl, cycloalkyl, cycloalkenyl, aryl, substituted aryl, halide, amino and thioether and combinations thereof, and optionally any adjacent $R_1$ to $R_5$ are linked together to form a

5-membered or 6-membered ring,
and wherein n is an integer from 0 to 2, preferably an integer from 1 to 2, more preferably n is 1,

(iii) a zinc fatty acid salt, like zinc stearate,

- processing said polymer composition to form the article,

wherein the processing temperature is not higher than 250°C, preferably not higher than 230°C, more preferably not higher than 220°C, still more preferably not higher than 210°C, yet more preferably not higher than 200°C, still yet more preferably not higher than 195 °C, like not higher than 190°C.

**2.** Process according to claim 1, wherein the processing step is a molding step, preferably an injection molding step and/or a blow molding step, more preferably a thin walled injection molding step, a sequential injection molding step, a co-injection-gas assisted molding step, a structural foam molding step, an extrusion blow molding step, an injection blow molding step and/or an injection stretch molding step.

**3.** Process according to any one of claims 1 to 2, wherein the polymer composition does not contain calcium stearate, more preferably does not contain calcium fatty acid salts, still more does not contain earth alkali fatty acid salt, yet more preferably the zinc fatty acid salt, like the zinc stearate is the only fatty acid salt within the polymer composition.

**4.** Process according to any one of claims 1 to 3, wherein the polymer composition comprises additionally

(a) a second nucleating agent (NU2)
and/or
(b) an optical brightener (OB).

**5.** Process according to any one of claims 1 to 4, wherein the polymer composition comprises

(i) the polypropylene (PP) in an amount of more than 95.0 wt.-%, based on the weight of the polymer composition,
(ii) the first nucleating agent (NU1) in an amount of equal or below 0.5 wt.-%, based on the weight of the polymer composition,
(iii) the zinc fatty acid salt, like the zinc stearate, optionally together with earth alkali fatty acid salts in an amount below 0.5 wt.-%, based on the weight of the polymer composition,
(iv) optionally the second nucleating agent (NU2) in an amount of equal or below 1.0 wt.-%, based on the weight of the polymer composition, and
(v) optionally the optical brightener (OB) in an amount of equal or below 0.100 wt.-%, based on the weight of the polymer composition.

**6.** Process according to any one of claims 1 to 5, wherein the polypropylene (PP)

(a) is a propylene copolymer preferably comprising equal or below 5 wt.-% comonomer, wherein preferably the comonomer is selected from ethylene and/or one or more $C_4$-$C_8$ $\alpha$-olefins, more preferably selected from ethylene and/or 1-butene, yet more preferably is ethylene.
and/or
(b) is monophasic.

**7.** Process according to any one of claims 1 to 6, wherein the polypropylene copolymer is a random propylene ethylene copolymer.

**8.** Process according to any one of claims 1 to 7, wherein the first nucleating agent (NU

1) has the structure,

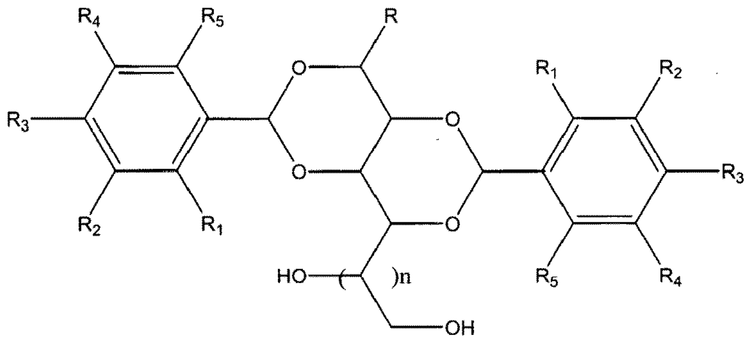

wherein R is independently selected from the group consisting of hydrogen, methyl, ethyl, iso-propyl, n-butyl, sec-butyl, iso-butyl and tert-butyl wherein $R_1$ to $R_5$ are independently selected from the group consisting of hydrogen, chlorine, methyl, ethyl, n-propyl, iso-propyl, n-butyl, sec-butyl, iso-butyl and tert-butyl and wherein n is 1.

**9.** Process according to any one of claims 1 to 8, wherein the nucleating agent (NU) is selected from the group consisting of 1,3:2,4 bis(dibenzylidene)sorbitol, 1,3 : 2,4 bis(4-methylbenzylidene)sorbitol, 1,3 : 2,4 bis(4-ethylbenzylidene)sorbitol, 1,3 : 2,4 bis(3,4-dimethylbenzylidene)sorbitol, and 1,3 : 2,4 bis(3-chloro-benzylidene) sorbitol.

**10.** Process according to any one of claims 1 to 9, wherein zinc fatty acid salt, like zinc stearate, is present in amount of from 0.008 to 0.150 wt.-%, preferably from 0.010 to 0.100 wt.-%, more preferably from 0.03 to 0.07 wt.-%, and even more preferably from 0.040 to 0.060 wt.-%, based on the weight of the polymer composition.

**11.** Process according to any one of claims 1 to 10, wherein the weight ratio between the zinc fatty acid salt, like zinc stearate, and the earth alkali fatty acid salts, like calcium stearate, is 20/80 to 80/20, more preferably 30/70 to 70/30, yet more preferably 40/60 to 60/40, like 45/55 to 55/45.

**12.** Process according to any one claims 1 to 10, wherein the optical brightener (OB) is selected from the group consisting of 5-methyl-2,2'-(vinylenedi-p-phenylene)bis-benzoxazole, 2,2'-(4,4'-diphenol vinyl)dibenzoxazole, 2,5-bis(5-tert-butylbenzooxazol-2-yl)thiophene, 1,4-bis(2-benzoxazolyl)napthalene, 2-(5-Chlorobenzo[d]oxazol-2-yl)acetonitrile.

**13.** Process according to any one of claims 1 to 12, wherein the polymer composition is provided by melt-blending, more preferably by melt blending at a temperature in the range of 110 to 140 °C, the polypropylene (PP) with the first nucleating agent (NU1), the zinc fatty acid salt, like zinc stearate, optionally the earth alkali fatty acid salts, optionally the second nucleating agent (NU2) and optionally optical brightener (OB).

**14.** Article comprising a polymer composition as defined in any of the previous claims 1 and 3 to 9, having

(a) a haze in the range from 20 to 40 %, preferably 25 to 35 %, wherein the haze is measured according to ASTM D 1003-07 on 60 x 60 $mm^2$ plaques thickness of 2 mm prepared according to EN ISO 1873-2 at a processing temperature of the plaques of 190°C,
and/or
(b) yellowness index in the range of -20 to 15, preferably from -15 to 5 as determined according to ASTM E313.
and/or
(c) thickness from 0.3 mm to 5.0 mm, preferably from 0.4 to 3.5 mm, more preferably from 0.5 to 2.0 mm.

**15.** Article obtained by the process according to any one of claims 1 to 13.

**16.** Use of a zinc fatty acid salt, preferably zinc stearate, in a process for processing the polymer composition according to claims 1 to 13 at a temperature of not higher than 250°C, preferably not higher than 230°C, more preferably not higher than 220°C, still more preferably not higher than 210°C, yet more preferably not higher than 200°C, still yet more preferably not higher than 195 °C, like not higher than 190°C to form an article, preferably a molded article from said polymer composition, said article having reduced haze relative to the same article formed in the absence of said a zinc fatty acid salt, wherein haze is measured according to ASTM D 1003-07 on 60 x 60 $mm^2$ plaques having thickness of 2 mm prepared according to EN ISO 1873-2 at a processing temperature of the plaques of 190°C., wherein the reduction of haze preferably is at least 5%, preferably by at least 10%, more preferably by at

least 15 %, even more preferably by at least 25 %, and most preferably by at least 35%.

Europäisches Patentamt
European Patent Office
Office européen des brevets

# EUROPEAN SEARCH REPORT

Application Number
EP 15 20 1586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE CA [Online] CHEMICAL ABSTRACTS SERVICE, COLUMBUS, OHIO, US; 15 August 2006 (2006-08-15), BYUN, YEONG HUN ET AL: "Calendering-processable polypropylene composition for transparent film or sheet and calendering process therewith", XP002758287, retrieved from STN Database accession no. 2006:810195 | 1-16 | INV. C08K5/00 C08K5/098 C08K5/1575 C08K5/353 C08K5/45 |
| Y | * abstract * | 1-16 | |
| X | -& KR 2004 0099865 A (HANWHA L & C CORP) 2 December 2004 (2004-12-02) * abstract * ----- | 1-16 | |
| Y | DATABASE CA [Online] CHEMICAL ABSTRACTS SERVICE, COLUMBUS, OHIO, US; 29 November 2012 (2012-11-29), NIGA, SUKEHIRO ET AL: "Diacetal compositions, polyolefin compositions, nucleating agents therefor, transparent polyolefin moldings therefrom, method and agents for preventing odor and flavor from spreading, and method for preventing generation of aldehydes", XP002758288, retrieved from STN Database accession no. 2012:1733143 * abstract * -& JP 2012 233149 A (NEW JAPAN CHEM CO LTD) 29 November 2012 (2012-11-29) ----- | 1-16 | TECHNICAL FIELDS SEARCHED (IPC) C08K C08L |
| X | US 2007/080485 A1 (KERSCHER CHRISTOPHER S [US] ET AL) 12 April 2007 (2007-04-12) * abstract; claim 1; example 3 * ----- | 1-16 | |
| | -/-- | | |

The present search report has been drawn up for all claims

1

| Place of search | Date of completion of the search | Examiner |
|---|---|---|
| Munich | 1 June 2016 | Schütte, Maya |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 15 20 1586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2006/127235 A2 (MILLIKEN & CO [US]; XU JIANNONG [US]; ZHAO XIAODONG EDWARD [US]; LI JI) 30 November 2006 (2006-11-30)<br>* abstract; claims 1-5; examples 1-10 *<br>----- | 1-16 | |
| | | | TECHNICAL FIELDS SEARCHED (IPC) |

1

The present search report has been drawn up for all claims

| Place of search | Date of completion of the search | Examiner |
|---|---|---|
| Munich | 1 June 2016 | Schütte, Maya |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 15 20 1586

This annex lists the patent family members relating to the patent documents cited in the above-mentioned European search report. The members are as contained in the European Patent Office EDP file on
The European Patent Office is in no way liable for these particulars which are merely given for the purpose of information.

01-06-2016

| Patent document cited in search report | Publication date | Patent family member(s) | Publication date |
|---|---|---|---|
| KR 20040099865 A | 02-12-2004 | NONE | |
| JP 2012233149 A | 29-11-2012 | NONE | |
| US 2007080485 A1 | 12-04-2007 | US 2007080485 A1 | 12-04-2007 |
| | | WO 2007044122 A1 | 19-04-2007 |
| WO 2006127235 A2 | 30-11-2006 | BR PI0610208 A2 | 01-06-2010 |
| | | CN 101193960 A | 04-06-2008 |
| | | EP 1883675 A2 | 06-02-2008 |
| | | JP 2008542470 A | 27-11-2008 |
| | | JP 2013136771 A | 11-07-2013 |
| | | US 2006270766 A1 | 30-11-2006 |
| | | US 2008153949 A1 | 26-06-2008 |
| | | WO 2006127235 A2 | 30-11-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5234879 A
- WO 9219653 A
- WO 9219658 A
- WO 9933843 A
- WO 2004029112 A1
- EP 0887379 A1
- WO 9212182 A


### Non-patent literature cited in the description


- **GALLI et al.** *Angew. Macromol. Chem.,* 1984, vol. 120, 73
- Polypropylene Handbook. Carl Hanser Verlag, 2005, 359-380
- **HANS ZWEIFEL.** Plastic Additives Handbook. 2001
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **W-J. WANG ; S. ZHU.** *Macromolecules,* 2000, vol. 33, 1157